# EUROPÄISCHE PATENTSCHRIFT

(11) **EP 0 920 973 B1**
(45) Veröffentlichungstag und Bekanntmachung des Hinweises auf die Patenterteilung: **13.08.2003**
(21) Anmeldenummer: 98120363.1
(22) Anmeldetag: 28.10.1998
(51) Int. Cl.: B29C 47/88

(54) **Vorrichtung zum Anlegen einer aus einer Breitschlitzdüse austretenden Folie an eine sich drehende Abzugswalze**
Apparatus for pinning a film, leaving a film die, onto a turning haul off drum
Dispositif pour l'application d'un film sortant d'une filière plate sur un tambour de tirage

(30) Priorität: 07.11.1997 DE 19749320
(43) Veröffentlichungstag der Anmeldung: 09.06.1999
(73) Patentinhaber: Mitsubishi Polyester Film GmbH, 65203 Wiesbaden (DE)
(72) Erfinder: Zimmermann, Uwe, 56357 Hainau (DE); Müller, Harald Dr., 65232 Taunusstein (DE); Wacker, Detlef Dr., 55129 Mainz (DE)
(74) Vertreter: Zounek, Nikolai, Dipl.-Ing.

(56) Entgegenhaltungen:
- EP-A- 0 707 940
- EP-A- 0 850 747
- WO-A-95/21735
- DE-A- 4 126 529

## Beschreibung

Die Erfindung betrifft eine Vorrichtung zum Anlegen einer aus einer Breitschlitzdüse austretenden Folie an eine sich drehende Abzugswalze, mit zumindest einer parallel und in geringem Abstand zu der Oberfläche der Abzugswalze angeordneten Elektrode, an die elektrische Spannung angelegt ist.

Bei der Herstellung von Folien, mit Dicken zwischen 0,5 µm und 350 µm, werden Kunststoffgranulate zunächst in einem Extruder aufgeschmolzen und die extrudierte Kunststoffschmelze einer Breitschlitzdüse zugeleitet. Die aus dieser Breitschlitzdüse austretende Vorfolie wird an eine Abzugs- und Kühlwalze angelegt und nach dem Verlassen der Abzugswalze in einem Streckrahmen in und quer zur Maschinenlaufrichtung gestreckt.

Zum Stabilisieren des Anlegens der Vorfolie an die Abzugswalze werden im Stand der Technik zusätzliche Kräfte auf die Vorfolie in dem Bereich zwischen dem Austritt der Vorfolie aus der Breitschlitzdüse und dem Anlegepunkt auf der Abzugswalze aufgebracht. Die aufgebrachten zusätzlichen Kräfte können durch Anblasen der Vorfolie mit einem Luftstrahl aus einem Luftmesser, das Einsprühen von Wasser in den Zwickel der Vorfolie vor dem Anlegepunkt auf der Abzugswalze, die Ausbildung eines Wasserfilms auf der Abzugswalze und die Erzeugung eines elektrischen Feldes mittels einer auf Hochspannung liegenden Elektrode erzeugt werden, wobei die Feldlinien des elektrischen Feldes auf die Oberfläche der Abzugswalze gerichtet sind. Die zusätzlich aufgebrachten Kräfte dienen dazu, die zwischen der Oberfläche der Abzugswalze und der Unterseite der Vorfolie, das ist die der Abzugswalze zugewandte Seite der Vorfolie, eingeschlossene Luft unter dem Zwickel der Vorfolie vor dem Anlegen der Vorfolie an die Abzugswalze hinauszudrängen, um so das Anlegen der Vorfolie an die Walzenoberfläche über einen vorgegebenenUmschlingungswinkel zu stabilisieren. Wenn dies nicht gelingt, entstehen mehr oder weniger große Lufteinschlüsse, sogenannte "Pinning"-Blasen, die sich zwischen der Vorfolienunterseite und der Oberfläche der Abzugswalze befinden und die Glätte und somit die Qualität der auf der Abzugswalze abgekühlten Vorfolie sowie der daraus biaxial gereckten Folie verschlechtern.

Es ist bekannt, als Elektrode ein Metallband aus Edelstahl parallel zu der Abzugswalzenoberfläche anzuordnen, wobei das Metallband im allgemeinen aus einer Metallfolie von etwa 20 µm Dicke in einer Breite von 10 mm ausgestanzt oder ausgeschnitten wird. Ein derartiges Metallband hat den Nachteil, daß es nicht ausreichend hohe Spannkräfte aufnehmen kann, die erforderlich sind, das Metallband mit der gewünschten Genauigkeit im gleichmäßigen Abstand zu der Abzugswalze zu spannen. Des weiteren ist nachteilig, daß die durch den Schneide- bzw. Stanzprozeß entstehenden Kanten des Metallbandes unregelmäßig sind, so daß das elektrische Feld zwischen dem Metallband und der Abzugswalze verzerrt wird. Diese Verzerrungen des elektrischen Feldes werden auch noch aufgrund eines ungleichmäßigen Abstandes des Metallbandes von der Abzugswalzenoberfläche verstärkt. Die Verzerrungen eines elektrischen Feldes führen einerseits zu elektrischen Überschlägen, durch die die Vorfolie beschädigt werden kann, und andererseits zu einem nicht gleichmäßigen Anlegen der Vorfolie an die Abzugswalze, wodurch weiterhin Lufteinschlüsse zwischen der Vorfolie und der Abzugswalze auftreten können. Die Verzerrungen des elektrischen Feldes führen insgesamt nicht zu der gewünschten Folienqualität.

Aus der PCT-Anmeldung WO 95/21735 (deutsches Gebrauchsmuster G 94 02 027) ist eine Vorrichtung zur Herstellung von Folien, insbesondere Dünn- bzw. Dünnstfolien, bekannt, mit einer rotierenden Walze, mit der eine plastisch verformbare, vorzugsweise durch eine Breitschlitzdüse zugeführte Folie gefördert und gereckt wird, wobei zwischen der Walze und einem parallel in geringem Abstand zu der Walze angeordneten Metallband eine elektrische Spannung angelegt ist, durch die die zugeführte Folie an die Walze angelegt wird, bei der das Metallband eine scharfe Längskante aufweist, die der Walze nächstliegend angeordnet und auf diese gerichtet ist. Die scharfe Längskante ist nach Art einer Schneidkante an einem spitz zulaufenden Bereich des Metallbandes ausgebildet, wobei das Metallband nächstliegend in einem Abstand kleiner 6 mm zur Walze angeordnet ist. Die Mittellinie des spitz zulaufenden Bereichs ist auf den Mittelpunkt der Walze fluchtend ausgerichtet. Der Einsatz einer derartigen Metallband-Elektrode verbessert die Folienqualität, jedoch nicht in dem erforderlichen Ausmaß, da zwar die Lufteinschlüsse in ihren Durchmessern kleiner und in ihrer Anzahl weniger werden, jedoch keineswegs in dem Ausmaß, wie dies angestrebt wird.

Aus der US-A - 5,494,619 ist ein elektrostatisches Pinning-Verfahren bekannt, bei dem eine Drahtelektrode zwischen einer Extrusionsdüse und einer Abzugswalze angeordnet ist. Eine auf Vorspannung liegende Abschirmung befindet sich zwischen der Extrusionsdüse und der Drahtelektrode. Die Vorspannung der Abschirmung beträgt 1 bis 10 kV, während an der Drahtelektrode eine Spannung von 6 bis 15 kV anliegt. Bei diesem Verfahren ist es wesentlich, möglichst eine hohe elektrostatische Ladung auf die an die Abzugswalze anzulegende Folie aufzubringen, im Vergleich zu einer Anordnung, bei der die Abschirmung auf Erdpotential liegt Hierzu gibt es eine optimale Vorspannung der Abschirmung, die von der Spannung der Drahtelektrode abhängt, jedoch sich von dieser und dem Erdpotential wesentlich unterscheidet Der Nettostrom bzw. die elektrostatische Ladung auf die Folie ergibt sich aus der Differenz zwischen dem Strom der Drahtelektrode und einem zuvor gemessenen Strom zu der Abschirmung, der erhalten wird, indem die Abschirmung mit Spannung beaufschlagt wird und die Drahtelektrode auf Erdpotential sich befindet. Für eine vorgegebene Spannung, die an der Drahtelektrode anliegt, resultiert aus einer niedrigen elektrischen Spannung an der Abschirmung eine hohe Stromerzeugung, aber auch eine große Anzahl von Feldlinien, die mehrheitlich auf der Abschirmung enden und nicht auf der Folie. Durch Erhöhung der Spannung an der Abschirmung sinkt der Strom, jedoch enden mehr Feldlinien auf der Folie, wodurch der größte Teil des Stromes auf die Folie gelenkt wird. Eine Überlagerung zweier elektrostatischer Felder findet nicht statt, da die elektrisch vorgespannte Abschirmung dazu dient, die auf sie gerichteten Feldlinien der Drahtelektrode in Richtung der Folie umzulenken.

Aufgabe der Erfindung ist es, eine Vorrichtung der eingangs beschriebenen Art derart weiterzubilden und zu verbessern, daß die Lufteinschlüsse signifikant kleiner und weniger werden als bei im Stand der Technik bekannten Anlegevorrichtungen für Folien.

Diese Aufgabe wird erfindungsgemäß in der Weise gelöst, daß parallel zu der einen Elektrode in Gestalt eines Metallbandes das eine zusammenlaufende scharfe Bandkante aufweist, die auf die Oberfläche der Abzugswalze gerichtet ist, eine weitere Elektrode ohne zusammenlaufende scharfe Bandkante angeordnet ist und daß beide Elektroden an getrennten Stromquellen angeschlossen sind.

Bei einer Ausführungsform der Erfindung besteht die eine Elektrode aus einem geschliffenen Metallband und ist die weitere Elektrode ein ungeschliffenes Metallband.

In Ausgestaltung der Erfindung beträgt der Abstand der beiden Elektroden voneinander 6 bis 9 mm, insbesondere 7,5 mm.

In Weiterbildung der Erfindung besteht die eine Elektrode aus einem geschliffenen Metallband und ist die weitere Elektrode ein Rundstab mit einem Durchmesser von 3 bis 5 mm. In einer anderen Ausführungsform weist die weitere Elektrode beispielsweise einen rechteckigen Querschnitt auf, mit Kantenlängen 3 bis 6 mm und 80 bis 120 µm. Zweckmäßigerweise sind gleichgroße oder unterschiedlich große Spannungen an die Elektroden angelegt.

Mit der Erfindung wird der Vorteil erzielt, daß bei Anwendung getrennter Hochspannungsversorgung der Elektroden und dem Einsatz einer Elektrode, die keine scharfe Bandkante besitzt, das heißt bei der keine Ionisation auftritt, die Stabilität des Anlegevorgangs erheblich verbessert wird, ebenso die Prozeßsicherheit und das Positionieren der Elektroden vereinfacht wird, da im Vergleich zu Doppelbändern die Elektrode ohne scharfe Bandkante nicht sprüht, und dadurch die unerwünschte Wechselwirkung, wie sie bei Doppelbändern auftritt, verringert wird.

Die Erfindung wird im folgenden anhand von zeichnerisch dargestellten Ausführungsbeispielen näher erläutert. Es zeigen:
- Fig. 1: in schematischer Ansicht eine erste Ausführungsform einer Anlegevorrichtung für eine Folie nach der Erfindung, mit zwei Metallbändern als Elektroden, und
- Fig. 2: eine zweite Ausführungsform einer Anlegevorrichtung nach der Erfindung, bei der neben einem Metallband als Elektrode eine weitere Elektrode in Gestalt eines Rundstabes vorhanden ist.

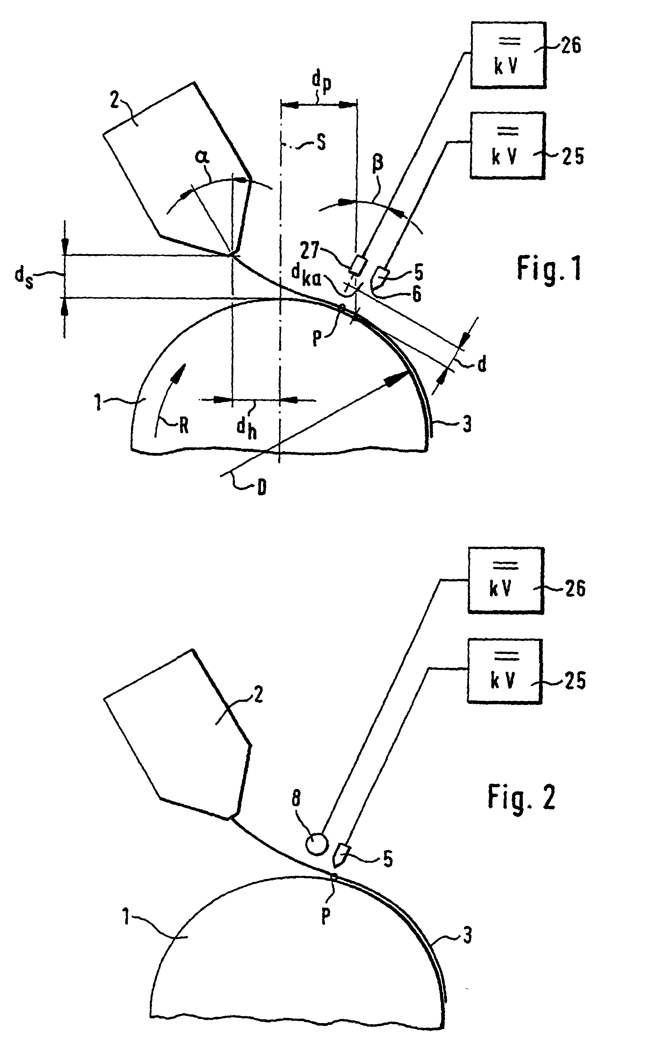

Die schematische Ansicht in Fig. 1 zeigt eine Abzugswalze 1 mit einem Durchmesser D, der 600 bis 1800 mm beträgt. Aus einer Breitschlitzdüse 2 wird eine Folie 3 extrudiert, die einen parabelförmigen Verlauf zwischen dem Austrittsschlitz der Breitschlitzdüse 2 und einem Anlegepunkt P auf der Oberfläche der Abzugswalze 1 hat. Bei dieser Folie 3 handelt es sich um eine sogenannte Vorfolie, die eine Dicke zwischen 0,015 bis 2,5 mm besitzt und eine Breite bis zu 3 m. Diese Folie 3 wird auf der Abzugswalze 1, die zugleich auch eine Kühlwalze ist, weitertransportiert und gelangt anschließend in einen nicht gezeigten Streck- bzw. Reckrahmen, in dem die Folie 3 in und quer zur Maschinenlaufrichtung gestreckt wird. Die Breitschlitzdüse 2 hat eine Breite im Bereich von 0,2 bis 2,9 m, insbesondere von mehr als 2 m.

Die Achse der Breitschlitzdüse 2 ist unter einem Winkel a zu einer Senkrechten S durch den Scheitelpunkt der Abzugswalze 1 geneigt. Der Winkel α liegt im Bereich von 20° bis 40°, und insbesondere ist a gleich 30°. Der senkrechte Abstand dₛ des Austrittsschlitzes der Breitschlitzdüse 2 von dem Scheitelpunkt der Abzugswalze 1 beträgt 15 bis 90 mm, insbesondere 70 mm. Das gleiche gilt für den horizontalen Abstand dₕ zwischen dem Austrittsschlitz der Breitschlitzdüse 2 und der Senkrechten S. Der Abstand dₕ beträgt 0 bis 90 mm, insbesondere 70 mm. In einem Abstand d gleich 3 bis 6 mm von der Oberfläche der Abzugswalze 1 ist, in Drehrichtung R der Abzugswalze 1 gesehen, nach dem Anlegepunkt P ein Metallband 5 als Elektrode angeordnet, das zusammen mit einem weiteren Metallband 27 als Elektrode Druck auf die Folie 3 ausübt um diese möglichst blasenfrei an die Oberfläche der Abzugswalze 1 anzulegen. Die beiden Metallbänder 5 und 27 sind zueinander parallel und an getrennte Stromquellen 25 und 26 angeschlossen, bei denen es sich um Hochspannungsquellen für Gleichstrom handelt, die an die beiden Metallbänder 5 und 27 jeweils eine Gleichspannung in der Größenordnung von 4 bis 12 kV anlegen. Der Abstand dₖₐ zwischen den Mittellinien der Elektroden beträgt 6 bis 9 mm und bevorzugt 7,5 mm. Die beiden Metallbänder 5 und 27 sind gegenüber der Senkrechten S durch den Scheitelpunkt der Abzugswalze 1 um den Winkel β geneigt, der im Bereich von 20 bis 40° liegt und insbesondere 30° beträgt. Der horizontale Abstand dₚ des näher zu der Senkrechten S liegenden Metallbandes 27 zu der Senkrechten S beträgt 10 bis 80 mm und insbesondere 30 bis 35 mm. Das Metallband 5 besitzt eine zusammenlaufende scharfe Bandkante 6, die durch Schleifen des Metallbandes entsteht Demgegenüber weist die andere Elektrode, das Metallband 27 keine Bandkante auf, da es sich um ein ungeschliffenes Metallband mit einem rechteckigen Querschnitt handelt, dessen Kantenlängen im Bereich von 3 bis 6 mm und 80 bis 120 um liegen.

In Fig. 2 ist schematisch eine zweite Ausführungsform einer Anlegevorrichtung nach der Erfindung gezeigt, die sich gegenüber der ersten Ausführungsform nach Fig. 1 nur dadurch unterscheidet, daß anstelle des ungeschliffenen Metallbandes 27 als weitere Elektrode 8 ein Rundstab vorhanden ist, der an die Hochspannungsquelle 26 angeschlossen ist, welche die Elektrode 8 mit einer Spannung im Bereich von 4,0 kV bis 12 kV beaufschlagt. Bei dieser Elektrode 8 handelt es sich um eine Stabelektrode mit kreisförmigem Querschnitt, der einen Durchmesser von 3 bis 5 mm, insbesondere von 3 mm, hat. Diese Elektrode 8 ist 3 bis 8 mm, bevorzugt 5 mm, senkrecht oberhalb des Scheitelpunktes der Abzugswalze 1 angeordnet. Der Abstand der Elektrode 8 von der Abzugswalze 1 richtet sich nach der Größe der angelegten Hochspannung an die Elektrode 8. Dabei wird der Abstand so gewählt, daß Überschläge weitgehend vermieden werden. Durch das Zuschalten eines weiteren additiven elektrischen Feldes durch die Elektrode 8 verändert sich die Bahn des Schmelzefilms von der Breitschlitzdüse 2 bis zum Anlegen an die Abzugswalze 1 nicht. Durch das zusätzliche additive elektrische Feld der Elektrode 8 wird die Anlegekraft auf den Schmelzefilm erhöht, wodurch es zu einer deutlichen Verbesserung der Vorfolienqualität hinsichtlich der Pinning-Blasen kommt, was sich in der Weise bemerkbar macht, daß die Anzahl der Pinning-Blasen erheblich zurückgeht, ebenso die Größe dieser Lufteinschlüsse.

Die Gestaltung der Elektroden 27 und 8, die keine scharfen Kanten haben, verhindert eine Ionisation der Luft zwischen den Elektroden und der an der Abzugswalze anliegenden Folie, d.h. mit anderen Worten, es werden keine zusätzlichen Ladungsträger erzeugt, während die Elektrode 5 wegen ihrer scharfen Bandkante 6 eine Ionisation mit entsprechend vielen Ladungsträgern auslöst, die die Folie gegen die Abzugswalze andrücken. Die von der Elektrode 27 bzw. 8 ausgehenden Feldlinien verstärken den Anstieg der Ladungsträger, die durch die Elektrode 5 erzeugt werden, auf der Folie wodurch der Liniendruck auf die Folie gegenüber dem Flächendruck erhöht wird, was mit einem besseren Anlegen, auch bei höheren Geschwindigkeiten, der Folie an die Abzugswalze einhergeht. Wegen der fehlenden Ionisation bzw. dem Nichtfließen von Ladungsträgern von der Elektrode 27 bzw. 8 zu der Folie auf der Abzugswalze ist der Pinningvorgang wesentlich stabiler als beim Einsatz von zwei Elektroden, von denen jede Ladungsträger erzeugt, die sich überlagern und zu einem verflachten Anstieg der Ladungsträger auf der Folie führen.

## Patentansprüche

1. Vorrichtung zum Anlegen einer aus einer Breitschlitzdüse austretenden Folie an eine sich drehende Abzugswalze, mit zumindest einer parallel und in geringem Abstand zu der Oberfläche der Abzugswalze angeordneten Elektrode, an die elektrische Spannung angelegt ist, **dadurch gekennzeichnet, daß** parallel zu der einen Elektrode (5) in Gestalt eines Metallbandes das eine zusammenlaufende scharfe Bandkante (6) aufweist, die auf die Oberfläche der Abzugswalze (1) gerichtet ist, eine weitere Elektrode (8; 27) ohne zusammenlaufende scharfe Bandkante angeordnet ist und daß beide Elektroden an getrennten Stromquellen (25; 26) angeschlossen sind.

2. Vorrichtung zum Anlegen einer aus einer Breitschlitzdüse austretenden Folie an eine sich drehende Abzugswalze, mit zumindest einer parallel und in geringem Abstand zu der Oberfläche der Abzugswalze angeordneten Elektrode, an die elektrische Spannung angelegt ist, nach Anspruch 1, **dadurch gekennzeichnet, daß** die eine Elektrode (5) aus einem geschliffenen Metallband besteht und die weitere Elektrode (27) ein ungeschliffenes Metallband ist.

3. Vorrichtung nach Anspruch 1, **dadurch gekennzeichnet, daß** der Abstand der beiden Elektroden (5; 8; 27) voneinander 6 bis 9 mm, insbesondere 7,5 mm beträgt.

4. Vorrichtung nach Anspruch 1, **dadurch gekennzeichnet, daß** die eine Elektrode (5) aus einem geschliffenen Metallband besteht und die weitere Elektrode (8) ein Rundstab mit einem Durchmesser von 3 bis 5 mm ist.

5. Vorrichtung nach Anspruch 2, **dadurch gekennzeichnet, daß** die weitere Elektrode (27) einen rechteckigen Querschnitt aufweist, mit den Kantenlängen 3 bis 6 mm und 80 bis 120 µm.

6. Vorrichtung nach Anspruch 1, **dadurch gekennzeichnet, daß** gleichgroße oder unterschiedlich große Spannungen an die Elektroden (5; 8 bzw. 27) angelegt sind.

## Claims

1. A device for laying a film emerging from a slot die onto a rotating take-off roll, having at least one electrode which is arranged parallel to and at a short distance from the surface of the take-off roll and to which voltage is applied, wherein, parallel to the one electrode (5), which is in the form of a metal strip which has a tapering sharp strip edge (6) that is oriented toward the surface of the take-off roll (1), there is arranged a further electrode (8; 27) without a tapering sharp strip edge, and wherein the two electrodes are connected to separate power sources (25; 26).

2. A device for laying a film emerging from a slot die onto a rotating take-off roll, having at least one electrode which is arranged parallel to and at a short distance from the surface of the take-off roll and to which voltage is applied, as claimed in claim 1, wherein one electrode (5) consists of a ground metal strip and the further electrode (27) is an unground metal strip.

3. The device as claimed in claim 1, wherein the distance of the two electrodes (5; 8; 27) from each other is 6 to 9 mm, in particular 7.5 mm.

4. The device as claimed in claim 1, wherein one electrode (5) consists of a ground metal strip and the further electrode (8) is a round rod with a diameter of 3 to 5 mm.

5. The device as claimed in claim 2, wherein the further electrode (27) has a rectangular cross section, with edge lengths of 3 to 6 mm and 80 to 120 µm.

6. The device as claimed in claim 1, wherein voltages of equal or different magnitude are applied to the electrodes (5; 8 or 27).

## Revendications

1. Dispositif pour appliquer une feuille, qui sort d'une filière à fente large, sur un cylindre de tirage rotatif qui comporte au moins une électrode disposée parallèlement à une faible distance de la surface du cylindre de tirage et à laquelle est appliquée une tension électrique, **caractérisé en ce qu'**une autre électrode (8; 27) sans bord de bande convergent à arête vive est disposée parallèlement à l'électrode (5) sous la forme d'une bande métallique, qui comporte un bord de bande convergent à arrête vive (6), qui est dirigé sur la surface du rouleau de tirage (1), et **en ce que** les deux électrodes sont raccordées à des sources de courant séparées (25; 26).

2. Dispositif pour appliquer une feuille, qui sort d'une filière à fente large, sur un cylindre de tirage rotatif qui comporte au moins une électrode disposée parallèlement à une faible distance de la surface du cylindre de tirage et à laquelle est appliquée une tension électrique selon la revendication 1, **caractérisé en ce que** l'électrode (5) est constituée par une bande métallique polie et **en ce que** l'autre électrode (27) est une bande métallique non polie.

3. Dispositif selon la revendication 1, **caractérisé en ce que** la distance réciproque des deux électrodes (5; 8; 27) est comprise entre 6 et 9 mm et égale notamment à 7,5 mm.

4. Dispositif selon la revendication 1, **caractérisé en ce qu'**une électrode (5) est constituée par une bande métallique polie et **en ce que** l'autre électrode (8) est un barreau cylindrique possédant un diamètre compris entre 3 et 5 mm.

5. Dispositif selon la revendication 2, **caractérisé en ce que** l'autre électrode (27) possède une section transversale rectangulaire, dont les bords possèdent des longueurs comprises entre 3 et 6 mm et entre 80 et 120 µm.

6. Dispositif selon la revendication 1, **caractérisé en ce que** des tensions identiques ou différentes sont appliquées aux électrodes (5; 8 et 27).
